Europäisches Patentamt

European Patent Office

Office européen des brevets

(19)

(11) Veröffentlichungsnummer: **0 208 008**
**B1**

(12) **EUROPÄISCHE PATENTSCHRIFT**

(45) Veröffentlichungstag der Patentschrift:
05.10.88

(51) Int. Cl.⁴: **B 60 R 1/08**

(21) Anmeldenummer: **85108548.0**

(22) Anmeldetag: **10.07.85**

(54) **Fahrzeug-Innenspiegel mit lichtelektrisch gesteuerter Abblendung.**

(43) Veröffentlichungstag der Anmeldung:
**14.01.87 Patentblatt 87/3**

(45) Bekanntmachung des Hinweises auf die Patenterteilung:
**05.10.88 Patentblatt 88/40**

(84) Benannte Vertragsstaaten:
**AT BE CH DE FR GB IT LI LU NL SE**

(56) Entgegenhaltungen:
**EP - A - 0 067 335**
**EP - A - 0 074 015**
**WO - A - 84/01132**
**US - A - 4 448 488**

(73) Patentinhaber: **HOHE KG, Hauptstrasse 36,
D-6981 Collenberg (DE)**

(72) Erfinder: **Polzer, Herwig, Philip-Larens-Strasse 36,
D-6982 Freudenberg (DE)**
Erfinder: **Kaspar, Rudolf, Ringstrasse 30,
D-6981 Collenberg (DE)**
Erfinder: **Fuchs, Hans-Joachim, Gartenstrasse 1a,
D-6981 Dorfprozelten (DE)**

(74) Vertreter: **Zinngrebe, Horst, Dr.rer.nat.,
Saalbaustrasse 11, D-6100 Darmstadt (DE)**

## Beschreibung

Die Erfindung betrifft einen Fahrzeug-Innenspiegel mit einem ein Spiegelglas tragenden Gehäuse, das an einer auf ein Ende eines Tragarms aufgeklemmten Montageplatte von einer Normalstellung in eine Abblendstellung und zurück schwenkbar befestigt ist und mit der Montageplatte über ein mit einer elektrischen Antriebsvorrichtung verbundenes Stellglied gekoppelt ist, sowie mit einem am Spiegel befestigten lichtempfindlichen Element. Ein Fahrzeug-Innenspiegel der obengenannten Art ist z.B. aus dem Dokument US-A-4 443 057 oder DE-A-3 234 157 bekannt.

Der in der US-A-3 680 951 beschriebene fotoelektrisch gesteuerte Rückspiegel besitzt als Antriebsvorrichtung einen Elektromagneten, bei dem der Stromfluss durch ein hinter dem Spiegelglas an einer Lücke des Spiegelbelags angebrachtes lichtempfindliches Element gesteuert wird. Vor jeder der beiden Stirnseiten des Elektromagneten ist je ein Permanentmagnet verschiebbar gelagert. Die beiden gleichsinnig magnetisierten Magnete sind auf einem relativ zum Elektromagneten axial verschiebbaren Gestänge mit einem gegenseitigen Abstand starr befestigt, der grösser ist als die Länge des Elektromagneten. Je nach Richtung des Stromflusses durch den Elektromagneten wird daher der eine oder andere Permanentmagnet an den Elektromagneten angezogen und der jeweils andere abgestossen. Mit dem Gestänge ist ein Schieber verbunden, der sich unter die Montageplatte erstreckt und einen horizontalen Ausschnitt aufweist, in welchen ein von der Montageplatte abstehender Arm eingreift. Der Ausschnitt besitzt zwei in Längsrichtung des Schiebers und quer dazu beabstandete Endstellungen, von denen die eine eine Normalstellung des Spiegels und die andere dessen Abblendstellung bestimmen.

Um den Spiegel in der jeweiligen Endstellung möglichst wackelfrei zu halten, muss der Elektromagnet dauernd von einem kräftigen Strom durchflossen sein, um die Permanentmagnete in sicherer Anlage zu halten. Damit wird die Stromquelle des Fahrzeugs erheblich belastet. Dennoch kann der Spiegel nach längerem Gebrauch nicht rüttelfrei in der jeweiligen Endstellung gehalten werden, weil die Führung des Stiftes in der Ausnehmung ausschlägt. Ausserdem erzeugt das Umschalten des Spiegels von der Normalstellung in die Abblendstellung ein erhebliches Geräusch, das geeignet ist, den Fahrer zu irritieren.

In der US-Patentschrift 3 722 984 ist ein Aussenspiegel für Lastkraftwagen mit fotoelektrischer Abblendungs-Steuerung beschrieben. Das lichtempfindliche Element, das am das Spiegelglas umgebenden Gehäuserand befestigt ist, steuert einen Antriebsmotor für ein Hebelwerk, das ein Abkippen des Spiegelglases relativ zum feststehenden Spiegelgehäuse ermöglicht. Zur Sicherung des Gehäuseinneren vor eindringendem Staub oder eindringender Feuchtigkeit ist vor dem Spiegelglas ein Schutzglas fest in das Gehäuse eingebaut. Der Verstellmechanismus wie auch die gesamte Konstruktion des Gehäuses sind derart aufwendig, dass eine Verwendung dieses Spiegels als Fahrzeuginnenspiegel wegen der durch das grossvolumige Gehäuse bedingten Sichtbehinderung des Fahrers nicht in Frage kommen kann.

Der in der deutschen Gebrauchsmusterschrift 73 19 284 beschriebene abblendbare, jedoch nicht fotoelektrisch gesteuerte Rückblickspiegel arbeitet mit einer Verstelleinrichtung in Form eines Elektromagneten, der nur während des Übergangs des Spiegels von einer Endstellung in die andere Strom aus dem Bordnetz des Fahrzeugs benötigt. Dazu besitzt der Anker der Magnetspule als Verlängerung eine Zahnstange, die mit einer gezahnten Kurvenscheibe kooperiert. Dieser Antrieb ist zwar relativ einfach konstruiert, jedoch wird bei diesem Rückblickspiegel das Spiegelgehäuse durch das Abkippen des Spiegelglases geöffnet, so dass die Verstelleinrichtung durch eindringenden Schmutz und Feuchtigkeit rasch verschleisst.

In der US-Patentschrift 4 443 057 ist ein fotoelektrisch abblendbarer Innenspiegel beschrieben, bei dem die Antriebseinrichtung einen über Riementriebe von einem Antriebsmotor betätigten Exzenter enthält, der durch Eingriff in eine Aussparung eines mit dem schwenkbaren Gehäuse verbundenen Hilfselementes die Spiegelverstellung gestattet. Dieser Verstellmechanismus ist wegen der zahlreichen für die Verstellung notwendigen und kompliziert ineinandergreifenden Einzelteile ausserordentlich teuer in der Herstellung und garantiert wegen des durch die vielen Einzelteile sich unabweisbar einstellenden Spiels keine erschütterungsfreie Halterung des Spiegels in den beiden Endstellungen.

Schliesslich ist aus der deutschen Offenlegungsschrift 3 234 157 ein Rückspiegel für Kraftfahrzeuge mit klappbarem Spiegelgehäuse bekannt, dessen Verstellmechanismus lichtelektrisch gesteuert ist. Zwei seitlich abstehende Finger der Montageplatte umgreifen einen Umfangsabschnitt eines Zahnrades, das mit einer auf der Abtriebswelle eines Elektromotors sitzenden Schnecke kämmt. Aus den gegenüberliegenden Stirnflächen des Zahnrades stehen bezüglich seiner Drehachse gegenüberliegende mit Schrägflächen versehene Rippen vor, welche bei drehendem Zahnrad den Zwischenraum zwischen den beiden Fingern der Montageplatte durchfahren und dabei eine Verstellung des Spiegelgehäuses bewirken. Diese Einrichtung hat den Nachteil, dass aufgrund des Nachlaufs des Elektromotors nach beendetem Stromfluss eine der Rippen aus dem Zwischenraum herausläuft, so dass die Position des Spiegelgehäuses nicht mehr definiert ist. Mit dieser Einrichtung ist es daher nicht möglich, mit der für jahrelangen Dauerbetrieb erforderlichen Sicherheit eine rüttelfreie Positionierung des Rückspiegels zu gewährleisten.

Der Erfindung liegt daher die Aufgabe zugrunde, einen Fahrzeuginnenspiegel der eingangs genannten Art mit einem preiswerten, leicht montierbaren Verstellmechanismus zu schaffen, der auch nach langer Benutzungszeit ein genaues und wackelsicheres Halten des Spiegelglases in jeder der beiden Endstellungen erlaubt.

Dazu ist erfindungsgemäss vorgesehen, dass das Stellglied ein motorgetriebener, drehbar gelagerter Zylinder ist, in dessen Mantel die Montageplatte eingefangen ist. Dadurch wird eine genaue Führung und

sichere Haltung des Spiegels in allen Betriebsphasen mit einfachen Mitteln erreicht.

Nach einer ersten Ausführungsform ist in den Mantel eine sich schräg zur Drehachse des Zylinders erstreckende, das freie Ende eines mit der Montageplatte verbundenen Stiftes einfangende Nut geschnitten.

Die Aufhängung des Spiegelgehäuses an der Montageplatte wird von bei der Verstellung gegebenenfalls auftretenden Kippmomenten dadurch befreit, wenn in Weiterbildung der Erfindung die Drehachse des Zylinders mit der Kugel des Tragarmes in einer gemeinsamen Ebene liegt, die sich quer zur Schwenkachse des Gehäuses erstreckt.

Ein besonders einfacher und geräuscharmer Antrieb des Zylinders wird durch eine Weiterbildung der Erfindung ermöglicht, gemäss der der Zylinder mit einem Motor über ein Getriebe gekoppelt und an seinem Umfang wenigstens teilweise gezahnt ist.

Die Montage des Innenspiegels wird erleichtert, wenn in bevorzugter Ausführungsform der Erfindung der Motor am Gehäuse befestigt und der Zylinder am Gehäuse gelagert sind und der Stift aus der Montageplatte vorsteht.

Um bei Erreichen einer der Endstellungen ein einfaches und sicheres Abschalten des Motors zu gewährleisten, ist in Weiterbildung der Erfindung vorgesehen, dass aus dem Mantel des Zylinders wenigstens eine Nase vorsteht, in deren Weg der Arm eines Mikroschalters ragt.

Um den Einfluss des Überdrehens des Motors nach Abschalten auf die Stellung des Spiegels auszuschalten besitzt die Nut in Weiterbildung der Erfindung an beiden Enden quer zur Drehachse der Scheibe sich erstreckende Verlängerungen.

Schliesslich kann das Aus- und Einschalten des Motors nach einer anderen Ausführungsform der Erfindung auch dadurch erreicht werden, dass der Mantel des Zylinders eine weitere Nut aufweist, in die der Arm eines Mikroschalters ragt.

Gemäss einer weiteren Ausführungsform der Erfindung ist der Zylinder als Exzenter ausgebildet, dessen Drehachse parallel zur Schwenkachse des Gehäuses verläuft und an dessen Mantel zwei bezüglich der Drehachse gegenüberliegende Arme der Montageplatte anliegen. Das Ein- und Ausschalten des Motors kann dann in einfacher Weise dadurch realisiert sein, dass ein Schaltarm eines Mikroschalters auf einer Nocke reitet, die aus einer an den Zylinder angeformten, um die Drehachse drehbaren Welle radial vorsteht.

Nachstehend wird die Erfindung anhand der in der beigefügten Zeichnung dargestellten Ausführungsbeispiele im einzelnen beschrieben. Es zeigen:

Fig. 1 eine schematische Frontalansicht eines Innenspiegels mit teilweise weggeschnittenem Spiegelglas;

Fig. 2 eine schematische Darstellung eines Schnittes C-C gemäss Fig. 1;

Fig. 3 die schematische Darstellung einer Ansicht D-D des Innenspiegels nach Fig. 1;

Fig. 4 eine schematische Abwicklung des Zylindermantels;

Fig. 5 eine der Fig. 1 ähnliche Ausschnitts-Darstellung einer anderen Ausführungsform der Erfindung;

Fig. 6 eine schematische Darstellung eines Schnittes E-E gemäss Fig. 5.

Der im ganzen mit 1 bezeichnete Innenspiegel ist für ein Kraftfahrzeug vorgesehen und wird von einem Tragarm 3 gehalten. Der Tragarm wird mit seinem nichtdargestellten Ende an der Innenseite der Windschutzscheibe oder der Karrosserie des Fahrzeugs in üblicher Weise befestigt. Das dargestellte, nach Einbau des Innenspiegels gegen die Fahrtrichtung weisende Ende 5 trägt eine Kugel 7, welche von einer Lagerschale 12 einer Montageplatte 10 formschlüssig umfasst ist. An der Montageplatte 10 ist das Gehäuse 30 des Innenspiegels schwenkbar befestigt, welches an der Rückseite eine Öffnung für die Kugel 7 und die Lagerschale 12 aufweist. Auf der der Kugel gegenüberliegenden, gegen die Fahrtrichtung weisenden Seite ist das Gehäuse 30 mit einem Spiegelglas 40 verschlossen, welches in einem umlaufenden, das Innere des Gehäuses 30 nach aussen verschliessenden Wulst 32 gehalten ist. Auf diese Weise bildet das Gehäuse 30 mit Wulst 32 und Spiegelglas 40 ein einteiliges Bauteil, welches als Ganzes gegenüber der Montageplatte 10 verschwenkbar ist. Das Spiegelglas 40 ist in üblicher Weise rückseitig mit einem Spiegelbelag versehen, der hier nicht im einzelnen dargestellt ist.

Der Formschluss zwischen der Lagerpfanne und der Kugel ist üblicherweise so fest, dass der Spiegel 1 drehfest am Tragarm 3 gehalten bleibt, vom Fahrer jedoch von Hand auf eine seiner Sitzposition angepasste Stellung gedreht werden kann.

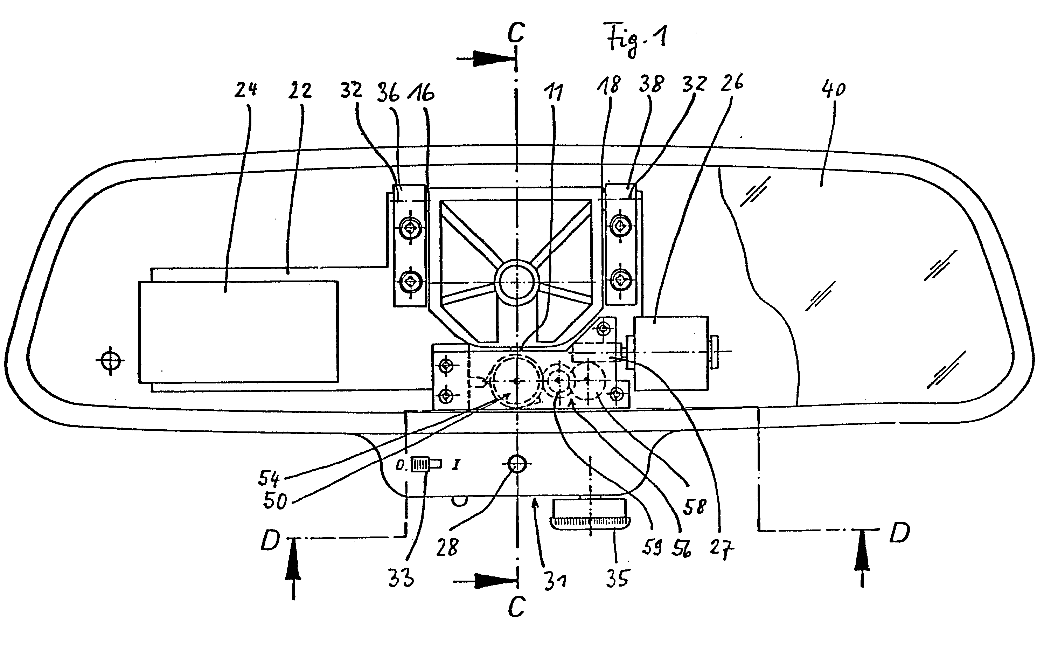

Der sich innerhalb des Gehäuses 30 über die Lagerschale 12 erstreckende Teil 14 besitzt zwei seitlich abstehende Zapfen 16, 18, welche von an der Gehäuserückwand mit Schrauben befestigten Laschen 36, 38 umfasst sind, so dass das Gehäuse 30 mit Spiegel 40 um die durch die Zapfen 16, 18 verlaufende, in Fig. 1 strichpunktiert angedeutete Schwenkachse 32 verschwenkbar ist.

Aus der Mitte des sich im Gehäuse unterhalb der Kugel 7 erstreckenden Teils 15 der Montageplatte 10 steht ein Stift 11 vor, der mit der Montageplatte 10 fest verbunden ist.

Auf einer auf der Innenseite der Gehäuserückwand 34 befestigten Hilfsplatte 22 ist auf der der Kugel 7 gegenüberliegenden Seite einer der Laschen 36 eine hier nur schematisch angedeutete elektronische Schaltung 24 montiert, die in nichtdargestellter Weise über elektrische Leitungen mit der Batterie des Fahrzeugs zur Stromversorgung verbunden ist. Ferner sind nicht dargestellt weitere elektrische Leitungen oder Leiterbahnen, die von der elektronischen Schaltung 24 zu einem Elektromotor 26 sowie einer Fotozelle 28 führen.

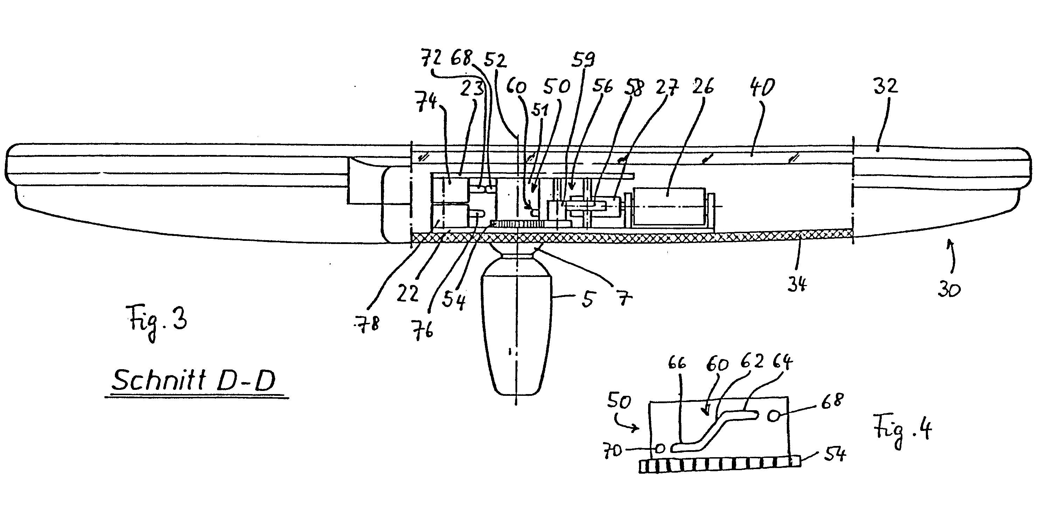

Auf der Hilfsplatte 22 ist an der der elektronischen Schaltung 24 gegenüberliegenden Seite ein Elektromotor 26 befestigt, dessen Abtriebswelle etwa parallel zur Schwenkachse 32 verläuft. Ferner ist zwischen dem unteren Rand der Montageplatte 10 und dem unteren Rand des Gehäuses 30 auf der Hilfsplatte 22 ein Zylinder 50 so drehbar befestigt, dass seine Drehachse 52 mit dem Mittelpunkt der Lagerschale 12 in einer sich quer zur Schwenkachse 32 erstreckenden Ebene liegt. Aus Stabilitätsgründen kann, wie Fig. 3 zeigt, über der Hilfsplatte 22 eine Deckplatte 23 in einem Abstand befestigt sein, der wenigstens gleich der axialen Länge des Zylinders 50 ist, so dass der Zylinder 50 mit nichtdargestellten Zapfen in der Hilfsplatte 22 und der Deckplatte 23 drehbar gehalten ist. An seiner der Hilfsplatte 22 benachbarten Stirnseite weist der Zylinder 50 über seinen Umfang eine Zahnung 54 auf, welche über ein im ganzen mit 56 bezeichnetes Untersetzungsgetriebe mit der auf der Abtriebswelle des Motors 26 befestigten Schnecke 27 in Antriebs-Verbindung steht. Im dargestellten Ausführungsbeispiel umfasst das Untersetzungsgetriebe 56 ein erstes mit der Schnecke 27 kämmendes Ritzel 58, welches mit einem gezahnten Abschnitt kleineren Durchmessers eines zweiten Ritzels 59 gekoppelt ist. Der gezahnte Abschnitt grösseren Durchmessers des zweiten Ritzels 59 kämmt mit der Zahnung 54 des Zylinders 50.

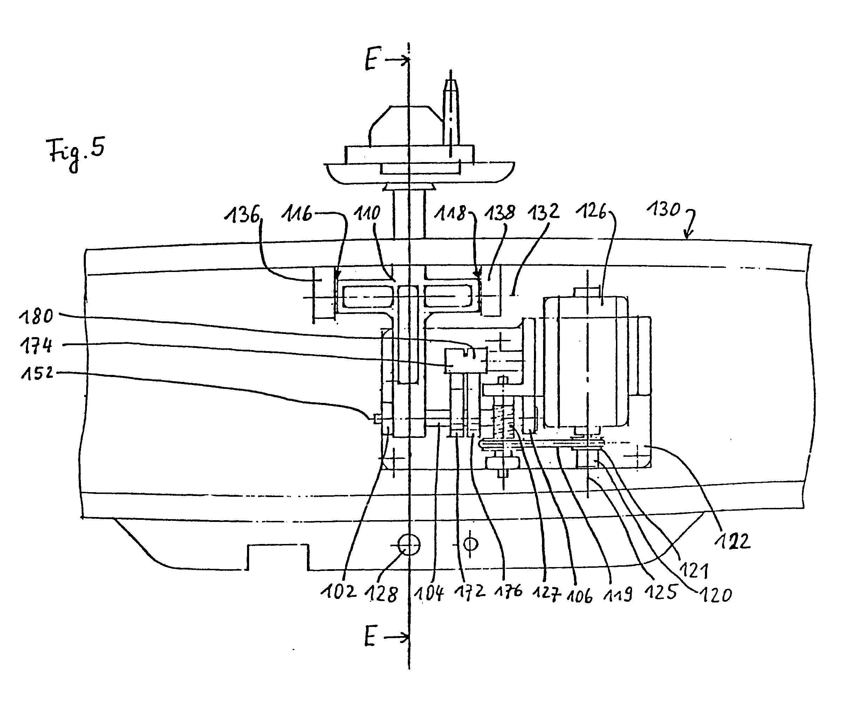

In dem Mantel 51 des Zylinders 50 oberhalb der Zahnung 54 ist eine Umfangsnut 60 eingeschnitten, welche gemäss der in Fig. 4 dargestellten Abwicklung des Zylindermantels einen mittleren, gegen die Achse 52 geneigten Abschnitt 62 aufweist, dessen Enden sich in je einen quer zur Achse 52 sich erstreckenden Endabschnitt 64, 66 fortsetzen. Im dargestellten Ausführungsbeispiel besitzt demzufolge der Endabschnitt 64 einen grösseren axialen Abstand von der Hilfsplatte 22 wie der Endabschnitt 66, wobei der mittlere Abschnitt 62 der Umfangsnut 60 etwa unter einem Winkel von 45 Grad gegen die Achse 52 verlaufen kann.

Aus dem unteren Rand der Montageplatte 10 steht ein Stift 11 vor, dessen freies Ende in der Umfangsnut 60 geführt ist.

Aus dem Mantel des Zylinders 50 stehen ausserhalb der Umfangsnut 60 zwei Arme 68, 70 vor, in deren Weg bei Drehung des Zylinders 50 je ein Schaltarm 72, 76 je eines Mikroschalters 74, 78 ragt. Gemäss Fig. 3 sind die Mikroschalter 74, 78 übereinander seitlich des Zylinders 50 auf der Hilfsplatte 22 bzw. der Deckplatte 23 befestigt und stehen über nichtdargestellte Leitungen mit der elektronischen Schaltung 24 in Verbindung.

Das Gehäuse 30 weist an seinem unteren mittleren Teil einen Ansatz 31 auf, in welchem eine Öffnung für die Fotozelle 28 vorgesehen ist. Ferner ist in dem Ansatz 31 ein Ein/Ausschalter 33 sowie ein Stellknopf 35 zur Empfindlichkeitsregelung der Ansprechschwelle der elektronischen Schaltung 24 auf Signale aus der Fotozelle 28 vorgesehen.

Der beschriebene Innenspiegel arbeitet wie folgt: Zunächst wird das Spiegelgehäuse von dem Fahrer in der üblichen Weise auf seine Sitzposition bei Tageslicht so ausgerichtet, dass er volle Sicht nach hinten durch das Spiegelglas 40 erhält. Dabei wird das Spiegelgehäuse mit Montageplatte 10 als Ganzes um die Kugel 7 verdreht. Der Stift 11 ist dann in den Endabschnitt 66 der Umfangsnut 60 eingefangen.

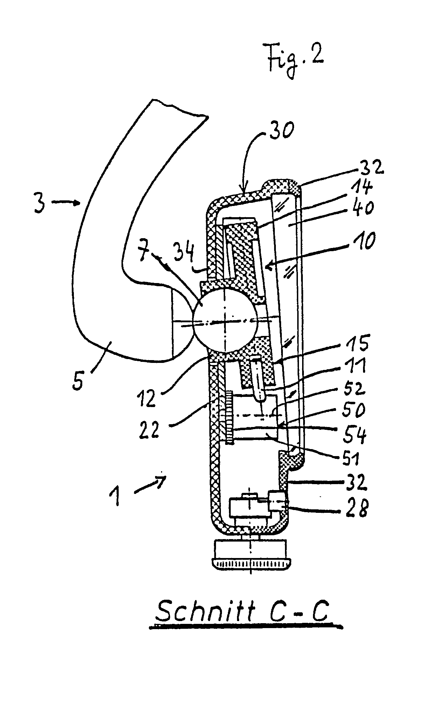

Die Fotozelle 28 erfasst das auf das Spiegelglas 40 fallende Licht. Überschreitet dieses etwa bei Blendung durch ein nachfolgendes Fahrzeug vor allem bei Nacht, eine durch Einstellung des Stellknopfes 35 vorgegebene Intensität, spricht die elektronische Schaltung 24 auf das von der Fotozelle 28 kommende Signal an und führt dem in seiner Drehrichtung reversiblen Motor 26 Strom einer bestimmten Polarität zu. Der Motor 26 versetzt daraufhin über das Untersetzungsgetriebe 56 den Zylinder 50 in eine Drehung im Uhrzeigersinn, so dass der Stift 11 aus dem Endabschnitt 66 über den mittleren Abschnitt 62 in den Endabschnitt 64 der Umfangsnut 60 gelangt. Bei seinem Einlaufen in den Endabschnitt 64 ist der Arm 68 gegen den Schaltarm 72 des Mikroschalters 74 gelaufen, hat diesen betätigt, woraufhin der Mikroschalter 74 den Stromfluss zum Motor 26 unterbricht. Das Spiegelglas ist jetzt gegen seine vollreflektierende Stellung abgekippt, der Spiegel also abgeblendet und nimmt eine Stellung ein, wie sie Fig. 2 zeigt. Die Montageplatte 10 hat ihre Stellung auf der Kugel 7 nicht verändert, das Gehäuse 30 mit Spiegelglas 40 ist gegen die Montageplatte 10 um die Schwenkachse 32 verkippt.

Unterschreitet die Intensität des auf die Fotozelle 28 auftreffenden Lichtes einen vorgegebenen Wert, spricht die elektronische Schaltung 24 erneut an und liefert Strom entgegengesetzter Polarität an den Motor 26. Dieser versetzt daraufhin über das Untersetzungsgetriebe 56 den Zylinder 50 in eine Drehung in umgekehrtem Sinne, so dass der Stift 11 aus dem Endabschnitt 64 in den Endabschnitt 66 gelangt. Bei seinem Einlaufen in den Abschnitt 66 fährt der Arm 70 gegen den Schaltarm 76 des Mikroschalters 78, der den Stromfluss zum Elektromotor unterbricht. Der Spiegel hat daraufhin seine normale aufgeblendete Stellung wieder eingenommen, wobei das Gehäuse 30 gegenüber der in Fig. 2 dargestellten Betriebsstellung um die Schwenkachse 32 relativ zur Montageplatte 10 im Gegensinn des Uhrzeigers verschwenkt worden ist.

Es liegt im Rahmen der Erfindung, die Ansprechschwelle für die elektronische Schaltung 24 von weiteren Parametern abhängig zu machen, beispielsweise von den Signalen aus einer weiteren Fotozelle, die zur Bestimmung der Tages- oder Nachtzeit das Umlicht aufnimmt und beispielsweise in Fahrtrichtung gerichtet sein kann.

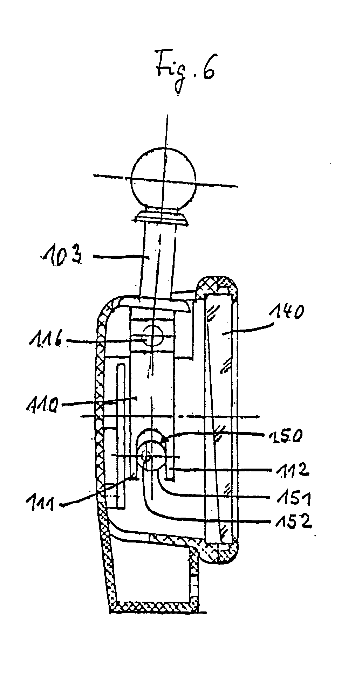

Bei der in den Fig. 5 und 6 dargestellten Ausführungsform der Erfindung sind auf dem Boden des Gehäuses 103 beiderseits der Mittelebene E-E zwei Pfosten 136, 138 aufgesetzt, in der in quer zur Ebene E-E fluchtenden Bohrung Zapfen 116, 118 einer T-förmigen Montageplatte 110 drehbar gehalten sind und die Schwenkachse 132 des Gehäuses 130 definieren.

Auf einer Platte 122 ist ein Elektromotor 126 so montiert, dass seine Abtriebswelle 120 um eine zur Ebene E-E parallele Achse 125 dreht. Auf der Abtriebswelle 120 sitzt drehfest eine Riemenscheibe 121, die über einen Riementrieb 119 mit einer Schnecke 127 gekoppelt ist. Die Schnecke 127 dreht parallel zur Achse 125 und kämmt mit einem im einzelnen nicht dargestellten Zahnabschnitt einer Welle 104, die an ihren gegenüberliegenden Enden in Böcken 102, 106 gelagert ist und um eine Drehachse 152 durch die Schnecke 127 drehbar ist, welche sich parallel zur Schwenkachse 132 erstreckt.

Auf der vom Motor 126 abgewandten Seite der erwähnten Verzahnung der Welle 104 sitzen in axialer Richtung nebeneinander auf der Welle 104 in Umfangsrichtung um etwa 180 Grad gegeneinander versetzt zwei Schaltnocken, von denen jeder gegen einen Schaltarm 172, 176 je eines zugehörigen Mikroschalters 174, 180 arbeitet. Jeder der beiden Mikroschalter 174, 180 liegt elektrisch in nicht dargestellter Weise in dem Stromversorgungskreis für den Motor 126.

An dem vom Motor 126 entfernten Abschnitt der Welle 104 ist an diese ein zur Drehachse 152 exzentrischer Zylinder 150 angeformt, dessen Mantel 151 die Achse 152 umschliesst. An dem Mantel 151 liegt je ein Arm 111, 112 des als Gabel ausgebildeten unteren Endes der Montageplatte 110 an, wobei die Arme 111, 112 den Mantel 151 längs zweier gegenüberliegender Berührungslinien kontaktieren.

Die Montageplatte 110 ist ähnlich wie bei der vorher beschriebenen Ausführungsform der Erfindung auf einen Tragarm 103 des Innenspiegels unverdrehbar aufgeklemmt.

Auch bei dieser Ausführungsform der Erfindung ist eine im einzelnen nicht dargestellte elektronische Schaltung 24 vorgesehen, die die von der Fotozelle 128 gelieferten Signale aufnimmt und in deren Abhängigkeit den Motor 126 mit Strom zu seinem Antrieb versorgt. Jeder der beiden Mikroschalter 174, 180 schaltet dann den Stromfluss zu dem Motor 126 durch entsprechende Betätigung der Schaltarme 172, 176 durch die zugehörigen Nocken ab, wenn der als Exzenter wirkende Zylinder 150 aufgrund seiner gehäusefesten Lagerung jeweils eine seiner beiden Drehstellungen erreicht hat, die der Normalstellung bzw. der Abblendstellung des Spiegelglases 140 entsprechen.

## Patentansprüche

1. Fahrzeug-Innenspiegel (1) mit einem ein Spiegelglas (40) tragenden Gehäuse (30), das an einer auf ein Ende (5) eines Tragarms (3) aufgeklemmten Montageplatte (10) zwischen einer Normalstellung und einer Abblendstellung schwenkbar befestigt ist und mit der Montageplatte (10) über ein mit einer elektrischen Antriebsvorrichtung (26) verbundenes Stellglied (50) gekoppelt ist, sowie mit einem am Spiegel befestigten, mit der Antriebsvorrichtung (26) verbundenen, lichtempfindlichen Element (28), dadurch gekennzeichnet, dass das Stellglied ein motorgetriebener, drehbar gelagerter Zylinder (50, 150) ist, an dessen Mantel (51, 151) eine Montageplatte (10) eingefangen ist.

2. Spiegel nach Anspruch 1, dadurch gekennzeichnet, dass in den Mantel (51) eine sich schräg zur Drehachse (52) des Zylinders (50) erstreckende, das freie Ende eines mit der Montageplatte (10) verbundenen Stiftes (11) einfangende Nut (60) geschnitten ist.

3. Spiegel nach Anspruch 1 oder 2, dadurch gekennzeichnet, dass der Zylinder (50) mit dem Motor (26) über ein Getriebe (56) gekoppelt ist und an seinem Umfang wenigstens teilweise gezahnt (54) ist.

4. Spiegel nach einem der vorstehenden Ansprüche, dadurch gekennzeichnet, dass der Motor (26) am Gehäuse (30) befestigt und der Zylinder an dem Gehäuse drehbar gelagert sind, und dass der Stift (11) aus der Montageplatte (10) vorsteht.

5. Spiegel nach einem der vorstehenden Ansprüche, dadurch gekennzeichnet, dass aus dem Mantel des Zylinders (50) wenigstens ein Arm (68, 70) vorsteht, der in den Weg eines Schaltarms (72, 76) eines Mikroschalters (74, 80) ragt.

6. Spiegel nach einem der Ansprüche 1 bis 5, dadurch gekennzeichnet, dass der Motor (26) am Gehäuse (30) befestigt ist, der Zylinder am Gehäuse drehbar gelagert ist, und der Stift (11) aus der Montageplatte (10) vorsteht.

7. Spiegel nach einem der Ansprüche 1 bis 4, dadurch gekennzeichnet, dass der Mantel des Zylinders (50) eine weitere Nut aufweist, in die der Arm eines Mikroschalters ragt.

8. Spiegel nach einem der vorstehenden Ansprüche dadurch gekennzeichnet, dass die Drehachse (152) des Zylinders (150) sich parallel zur Schwenkachse (132) des Gehäuses (130) erstreckt.

9. Spiegel nach Anspruch 8, dadurch gekennzeichnet, dass der Zylinder (150) ein Exzenter ist, an dessen Mantel (151) mit der Montageplatte (110) verbundene, bezüglich der Drehachse (152) gegenüberliegende Arme (111, 112) anliegen.

10. Spiegel nach einem der Ansprüche 8 oder 9, dadurch gekennzeichnet, dass der Zylinder (150) auf einer um die Drehachse (152) drehbaren Welle (160) sitzt, welche mit wenigstens einem radial vorstehenden Nocken versehen ist, auf dem der Schaltarm (172) eines Mikroschalters (174) der Antriebsvorrichtung reitet.

## Claims

1. Inside mirror (1) of a vehicle with a housing (30) carrying a mirror glas (40), which housing is attached for privotal movement between a normal setting and a dipped setting to an assembly plate (10) clamped to one end (5) of a supporting arm (3), and is coupled to the assembly plate (10) by means of an adjusting element (50) connected to an electrical driving device (26), and with a light-sensitive element (28) fitted to the mirror, connected to the driving device (26), characterised in that the adjusting element is a notor-driven, rotatably mounted cylinder (50, 150), on the surface (51, 151) whereof the assembly plate (10) is trapped.

2. Mirror according to Claim 1, characterised in that a groove (60) is cut into the surface (51), which groove extends diagonally to the axis of rotation (52) of the cylinder (50), trapping the free end of a pin (11) connected to the assembly plate (10).

3. Mirror according to Claim 1 or 2, characterised in that the cylinder (50) is coupled to the motor (26) by means of a gearing (56), and is toothed (54) over at least a part of its circumference.

4. Mirror according to one of the preceding claims, characterised in that the motor (26) is fitted to the housing (30) and the cylinder is mounted on the housing so as to rotate, and in that the pin (11) projects from the assembly plate (10).

5. Mirror according to one of the preceding claims, characterised in that at least one arm (68, 70) projects from the surface of the cylinder (50), which arm projects in the path of a switch arm (72, 76) of a microswitch (74, 80).

**0 208 008**

6. Mirror according to one of Claims 1 to 5, characterised in that the motor (26) is fitted to the housing (30), the cylinder is rotatably mounted on the housing, and the pin (11) projects from the assembly plate (10).

7. Mirror according to one of Claims 1 to 4, characterised in that the surface of the cylinder (50) displays a further groove, into which the arm of a microswitch projects.

8. Mirror according to one of the preceding claims, characterised in that the axis of rotation (152) of the cylinder (150) extends parallel to the swivel axis (132) of the housing (130).

9. Mirror according to Claim 8, characterised in that the cylinder (150) is an eccentric, against the surface (151) whereof rest arms (111, 112) connected to the assembly plate (110) and lying opposite the axis of rotation (152).

10. Mirror according to one of Claims 8 or 9, characterised in that the cylinder (150) sits on a shaft (160) rotatable about the axis of rotation (152), which shaft is provided with at least one radially projecting cam, whereon there rests the switch arm (172) of a microswitch (174) of the driving device.

**Revendications**

1. Rétroviseur intérieur de véhicule (1), avec un boîtier (30) qui supporte un verre de rétroviseur (40), qui est fixé, de manière à pouvoir pivoter d'une position normale dans une position antiéblouissante, sur une plaque de montage (10) emmanchée sur l'une des extrémités (5) d'un bras porteur (3) et qui est couplé à la plaque de montage (10) par l'intermédiaire d'un organe de réglage (50) relié à un dispositif d'entraînement électrique (26), ainsi qu'avec un élément photosensible (28) fixé sur le rétroviseur et relié au dispositif d'entraînement (26), caractérisé en ce que l'organe de réglage est un cylindre (50, 150) commandé par un moteur et monté de manière rotative, dans la partie latérale (51, 151) duquel est insérée la plaque de montage (10).

2. Rétroviseur conforme à la revendication 1, caractérisé en ce que, dans la partie latérale (51) est pratiquée une forge (60) s'étendant en oblique par rapport à l'axe de rotation (52) du cylindre (50) et retenant l'extrémité libre d'une broche (11) reliée à la plaque de montage (10).

3. Rétroviseur conforme à la revendication 1 ou 2, caractérisé en ce que le cylindre (50) est couplé au moteur (26) par l'intermédiaire d'un engrenage (56) et est au moins partiellement denté (54) à sa périphérie.

4. Rétroviseur conforme à l'une des revendications précédentes, caractérisé en ce que le moteur (26) est fixé sur le boîtier (30) et le cylindre est monté de manière rotative sur le boîtier, et en ce que la broche (11) dépasse de la plaque de montage (10).

5. Rétroviseur conforme à l'une des revendications précédentes, caractérisé en ce que la partie latérale du cylindre (50) dépasse au moins un bras (68, 70) qui se trouve sur la course d'un bras (72, 76) d'un microrupteur (74, 80).

6. Rétroviseur conforme à l'une des revendications 1 à 5, caractérisé en ce que le moteur (26) est fixé sur le boîtier (30), le cylindre est monté de manière rotative sur le boîtier, et la broche (11) depasse de la plaque de montage (10).

7. Rétroviseur conforme à l'une des revendications 1 à 4, caractérisé en ce que la partie latérale du cylindre (50) comporte une autre gorge dans laquelle pénètre le bras d'un microrupteur.

8. Rétroviseur conforme à l'une des revendications précédentes, caractérisé en ce que l'axe de rotation (152) du cylindre (150) s'étend parallèlement à l'axe de pivotement (132) du boîtier (130).

9. Rétroviseur conforme à la revendication 8, caractérisé en ce que le cylindre (150) est un excentrique sur la partie latérale (151) duquel sont appliqués des bras (111, 112) reliés à la plaque de montage (110) et opposés à l'axe de rotation (152).

10. Rétroviseur conforme à l'une des revendications 8 ou 9, caractérisé en ce que le cylindre (150) est disposé sur un arbre (160) qui peut retourner autour de l'axe de rotation (152) et qui est muni d'au moins une came dépassant radialement sur laquelle se déplace le bras de commande (172) d'un microrupteur (174) du dispositif d'entraînement.

C

Fig. 1

24 22 32 36 16     11   18 38 32 26     40

0. |▥| I

54
50

D

33    28     31   35    59 56 27

58

D

C

0 208 008

Fig. 2

Schnitt C - C

72 68 52          59
   23        60 50   56 58 27 26      40          32
74             51

Fig. 3

Schnitt D-D

78   22   54     5   7
     76

0 208 008

30

34

66  60 62 64
50        68
70          54

Fig. 4

Fig.5

0 208 008

Fig. 6

103

116

140

110

150

112

111

151

152